# FASCICULE DE BREVET EUROPEEN

(11) **EP 3 080 220 B1**
(45) Date de publication et mention de la délivrance du brevet: **01.04.2026**
(21) Numéro de dépôt: 14827495.4
(22) Date de dépôt: 11.12.2014
(51) Int. Cl.: C09D 183/04, C09D 183/10, A47J 36/02

(54) **ARTICLE CULINAIRE MUNI D'UN REVÊTEMENT HYBRIDE ET PROCÉDÉ POUR RÉALISER UN TEL ARTICLE**
KÜCHENUTENSIL MIT EINER HYBRIDBESCHICHTUNG UND VERFAHREN ZUR HERSTELLUNG SOLCH EINES UTENSILS
CULINARY UTENSIL PROVIDED WITH A HYBRID COATING AND PROCESS FOR PRODUCING SUCH A UTENSIL

(30) Priorité: 12.12.2013 FR 1362522
(43) Date de publication de la demande: 19.10.2016
(73) Titulaire: SEB S.A., 69130 Ecully (FR)
(72) Inventeur: BERRUX, Aurélien, F-73290 La Motte Servolex (FR)
(74) Mandataire: SEB Développement
(86) Numéro de dépôt international: PCT/FR2014/053266
(87) Numéro de publication internationale: WO 2015/086999

(56) Documents cités:
- EP-A1- 2 412 846
- EP-A1- 2 505 619
- EP-A2- 1 835 002
- WO-A1-2010/023402
- "Silicones", 15 April 2003, ENCYCLOPEDIA OF POLYMER SCIENCE AND TECHNOLOGY, WILEY, US, PAGE(S) 765 - 841, XP007918236

## Description

La présente invention concerne de manière générale un article dont au moins l'une des faces est munie d'un revêtement sol-gel hybride. Plus particulièrement, la présente invention concerne un article culinaire dont la face extérieure est munie, notamment au niveau du fond, d'un revêtement sol-gel hybride, qui est compatible avec une utilisation sur une plaque vitrocéramique ou à induction. La présente invention concerne également un procédé pour réaliser de tels articles.

Par voie sol-gel, on entend, au sens de la présente invention, le principe de synthèse comprenant la transformation d'une solution à base de précurseurs en phase liquide en un solide par un ensemble de réactions chimiques (hydrolyse et condensation) à basse température.

Par revêtement sol-gel, on entend, au sens de la présente invention, un revêtement synthétisé par voie sol-gel. Le revêtement ainsi obtenu peut être soit organo-minéral, soit entièrement minéral.

Par revêtement sol-gel hybride, on entend, au sens de la présente invention, un revêtement comportant un matériau sol-gel hybride comprenant une matrice formée par voie sol-gel à partir d'une résine de silicone seule ou en mélange avec un silane et/ou un alcoxyde métallique.

Les compositions de revêtements de type sol-gel sont connues pour être particulièrement fluides et donc peu adaptées à une application par sérigraphie. De telles compositions ne permettent pas non plus la mise en suspension d'une charge dense (par exemple de type métallique) dans la formulation.

Pour remédier à ces problèmes, la demanderesse a mis au point un procédé pour fabriquer un revêtement sol-gel hybride sur un substrat, dans lequel la nature de la composition sol-gel hybride est adaptée pour permettre son application par sérigraphie sur le substrat.

Une solution connue, pour permettre l'application par sérigraphie d'une composition sol-gel à base de précurseurs alcoxydes métalliques, consiste à en modifier la rhéologie. Le document brevet EP 2505619 décrit un article culinaire comprenant un fond recouvert d'un revêtement sol-gel comprenant successivement à partir du fond une première couche de revêtement sol-gel continue, une deuxième couche de revêtement sol-gel sérigraphique continue, et une troisième couche de revêtement sol-gel sérigraphique discontinue. Ainsi, le document brevet EP 2505619 décrit un procédé de fabrication d'un revêtement sol-gel dans lequel l'étape d'application de la composition sol-gel peut être réalisée par sérigraphie grâce à l'ajout d'une cellulose dans la composition sol-gel et grâce au remplacement de l'alcool généré lors de la phase d'hydrolyse-condensation du ou des précurseurs alcoxydes métalliques de la composition sol-gel par un solvant plus lourd tel qu'un glycol. La viscosité de la composition sol-gel est donc modifiée au cours de sa synthèse. Cette modification de la viscosité de la composition sol-gel permet en outre l'incorporation de billes denses (telles que des billes métalliques) dans la composition, en permettant leur maintien en suspension et le ralentissement, voire même l'arrêt, de la sédimentation des billes dans la composition.

Toutefois, le procédé de fabrication d'un revêtement sol-gel tel que décrit dans EP 2505619 est complexe (et donc couteux) et difficilement intégrable dans un flux de production. En effet, ce procédé nécessite une étape supplémentaire d'échange de solvant. En outre, un tel revêtement nécessite, pour une utilisation en tant que revêtement extérieur d'articles culinaires, l'introduction de billes métalliques faisant saillie sur le revêtement sol-gel et étant réparties de manière homogène à sa surface. En effet, il est connu de l'homme de l'art que les revêtements sol-gel, et en particulier ceux développés par voie alcaline, présentent une dureté élevée, qui constitue un inconvénient majeur lorsqu'on utilise l'article revêtu sur des plaques de cuisson en vitrocéramique : le frottement du revêtement sol-gel sur la plaque est un frottement de type verre sur verre, conduisant à l'apparition de rayures très préjudiciables non seulement à l'esthétique, mais aussi, et surtout, au bon fonctionnement de la plaque de cuisson.

La présente invention vise donc à proposer au consommateur un article, notamment culinaire, dont au moins l'une des faces, notamment la face extérieure, est munie d'un revêtement sol-gel hybride, qui est compatible avec une utilisation sur une plaque vitrocéramique ou à induction, qui ne nécessite pas l'introduction de billes, et qui peut être obtenu grâce à un procédé simple, peu couteux et facilement intégrable dans un flux de production.

Plus particulièrement, la présente invention a pour objet un article tel que revendiqué comprenant un support présentant deux faces opposées, dont l'une au moins est munie d'un revêtement sol-gel comprenant au moins une couche sol-gel se présentant sous forme d'un film continu d'un matériau sol-gel comprenant une matrice d'au moins un polyalcoxylate métallique,
caractérisé en ce que l'article selon l'invention comporte en outre un revêtement sol-gel hybride comprenant au moins une première couche sol-gel hybride sérigraphique recouvrant complètement ou partiellement ledit revêtement sol-gel, ladite première couche sol-gel hybride étant constituée d'un matériau sol-gel hybride comprenant une matrice formée à partir d'une première composition sol-gel hybride comprenant au moins une résine silicone (ou polysiloxane) et au moins un silane et/ou au moins un alcoxyde métallique.

Le revêtement sol-gel hybride selon l'invention présente l'avantage de ne pas rayer les plaques de cuisson en vitrocéramique, sans nécessiter la présence de billes et tout en présentant un aspect visuel brillant et lisse, ainsi qu'une bonne résistance à la chaleur, ce qui le rend particulièrement adapté pour décorer la surface extérieure du fond des articles culinaires.

Avantageusement, la résine silicone est présente à raison de 40 à 70 % en poids par rapport au poids total de ladite première composition sol-gel hybride.

A titre de résine silicone utilisable dans le cadre de la présente invention, on peut notamment citer la résine silicone commercialisée par la société WACKER sous la marque SILRES^{®} 610.

Avantageusement, la résine silicone est une résine silicone polyester.

A titre de résine silicone polyester utilisable dans le cadre de la présente invention, on peut notamment citer les résines silicone polyester commercialisées par la société TEGO sous la marque SlLIKOFTAL^{®}.

Avantageusement, la première couche sol-gel hybride est partiellement recouverte par une deuxième couche sol-gel hybride sérigraphique discontinue, qui est également constituée d'un matériau sol-gel hybride comprenant une matrice formée à partir d'une deuxième composition sol-gel hybride comprenant au moins une résine silicone (de préférence une résine silicone polyester) telle que définie précédemment et au moins un silane et/ou au moins un alcoxyde métallique.

Avantageusement, la résine silicone est présente à raison de 40 à 70 % en poids par rapport au poids total de ladite deuxième composition sol-gel hybride.

Par alcoxyde métallique, on entend, au sens de la présente invention, un matériau de type RiMX₍ₙ₋ᵢ₎ dans lequel :
- M est un métal ou métal de transition, et par exemple AI, Ce, Zr, Ti, Sn, V, Nb, Hf, Mg ou un lanthanide,
- n est la valence du métal ou métal de transition M,
- X est un groupement hydrolysable, les Xᵢ pouvant être identiques ou différents,
- R est un groupement alkyl, phényl ou organofonctionnel, les Rᵢ pouvant être identiques ou différents, et
- i = 0, 1, ... ou n-1.

Avantageusement, l'alcoxyde métallique est choisi parmi l'isopropoxyde de titane (TiPT) et l'isopropoxyde de zirconium.

Par silane, on entend, au sens de la présente invention, un matériau de type RᵢSiX₍₄₋ᵢ₎ dans lequel :
- X est un groupement hydrolysable, les Xᵢ pouvant être identiques ou différents,
- R est un groupement alkyl, phényl ou organofonctionnel, les Rᵢ pouvant être identiques ou différents, et
- i = 0, 1, 2 ou 3.

Avantageusement, le silane est choisi parmi le méthyl(triéthoxy)silane (MTES), le tétraéthoxysilane (TEOS), le (3-aminopropyl)triéthoxysilane (APTES) et leurs mélanges.

De manière avantageuse, le matériau sol-gel hybride de la première couche sol-gel hybride, et/ou de la deuxième couche sol-gel hybride le cas échéant, peut en outre comprendre au moins une charge pigmentaire et/ou au moins une charge renforçante.

A titre de charges pigmentaires utilisables dans le cadre de la présente invention, on peut notamment citer le mica enrobé ou non, le dioxyde de titane, les oxydes mixtes (spinelles), les alumino-silicates, les oxydes de fer, le noir de carbone, le rouge de pérylène, les paillettes métalliques, les pigments et les colorants organiques thermochromes, et leurs mélanges.

Ces charges pigmentaires ont pour principal effet d'apporter de la couleur, et en outre d'améliorer la diffusion de la chaleur, d'améliorer la dureté (et la durabilité) du revêtement et d'avoir des propriétés lubrifiantes.

Par charges renforçantes, on entend, au sens de la présente invention, des charges qui sont utilisées pour limiter ou supprimer le rayage de la surface des plaques vitrocéramiques ou à induction par le revêtement selon l'invention. En d'autres termes, ces charges renforçantes permettent d'améliorer la capacité du revêtement selon l'invention à ne pas rayer la surface des plaques vitrocéramiques ou à induction.

La charge renforçante utilisable selon l'invention peut avantageusement comprendre des billes métalliques. De préférence, une partie desdites billes métalliques fait saillie sur le revêtement sol-gel hybride, les billes faisant saillie étant réparties de manière homogène à la surface dudit revêtement.

Par billes, on entend au sens de la présente invention des charges arrondies ayant sensiblement la forme d'une sphère.

Les billes affleurant à la surface du revêtement sol-gel hybride selon l'invention ont pour effet de limiter le contact avec la plaque vitrocéramique ou à induction en créant un effet de type « roulement à billes ».

Pour obtenir un tel effet, la densité surfacique des billes métalliques qui font saillie sur ledit revêtement sol-gel hybride peut avantageusement être comprise entre 50 et 300 charges/mm².

Au-dessous d'une densité surfacique de 50 charges/mm², la répartition pondérale du revêtement sol-gel hybride selon l'invention ne pourra pas être uniforme. Au-dessus d'une densité surfacique de 300 charges/mm², on observe une diminution de la résistance aux chocs thermiques, ainsi qu'une perte de brillance, du revêtement sol-gel hybride selon l'invention.

De préférence, la densité surfacique des billes qui font saillie sur ledit revêtement sol-gel hybride est comprise entre 100 et 250 charges/mm². Cette gamme permet de conserver à la fois une bonne facilité d'application et un effet de type « roulement à billes » maximal.

Les billes constituant la charge renforçante peuvent être de différentes natures, par exemple en verre ou en métal (ou alliage métallique).

On utilisera avantageusement, dans le cadre de la présente invention, des billes en acier inoxydable comme celles commercialisées par la société HOGANAS sous la dénomination commerciale 316 HIC 15 µm.

Lorsque des billes « renforçantes » sont présentes dans le revêtement sol-gel hybride, leur quantité et leur granulométrie sont cruciales car elles doivent affleurer la surface du revêtement sans en dénaturer l'aspect et tout en conservant l'homogénéité.

En ce qui concerne la quantité des billes, celle-ci pourra avantageusement être comprise entre 0,01 % et 40 %, de préférence entre 0,01 % et 5 %, en poids par rapport au poids total de chaque couche sol-gel hybride du revêtement sol-gel hybride après cuisson.

Au-dessous de 0,01 %, l'effet des billes sur les propriétés de la couche sol-gel hybride est négligeable car cette teneur en billes ne permet pas de s'affranchir du contact rayant entre la surface sol-gel et la plaque vitrocéramique tandis qu'au-dessus de 5 %, la cohésion entre les billes et la couche sol-gel hybride selon l'invention peut être altérée.

En ce qui concerne la granulométrie des billes, leur diamètre est de préférence compris entre 5 et 30 µm, leur diamètre moyen étant de préférence compris entre 15 et 20 µm, tandis que l'épaisseur de la première couche sol-gel hybride, et de la deuxième couche sol-gel hybride le cas échéant, est comprise entre 5 et 20 µm, de sorte qu'une partie des billes affleure à la surface du revêtement sol-gel hybride. Toutes les billes, engagées sur une profondeur qui est au moins égale à leur diamètre, sont parfaitement ancrées dans le revêtement sol-gel hybride.

L'article selon l'invention pourra avantageusement être un article culinaire présentant un support avec une face intérieure apte à recevoir des aliments et une face extérieure destinée à être disposée du côté d'une source de chaleur, la face extérieure étant revêtue du revêtement sol-gel et du revêtement sol-gel hybride tels que définis ci-dessus.

Avantageusement, le revêtement sol-gel recouvre toute la face extérieure du support de l'article culinaire, tandis que le revêtement sol-gel hybride est appliqué uniquement sur la partie de la face extérieure correspondant à la zone du fond de l'article.

Le support utilisable dans le cadre de la présente invention pourra avantageusement être réalisé en un matériau choisi parmi les métaux, le verre, les matières plastiques et les céramiques.

A titre de supports métalliques utilisables dans le cadre de la présente invention, on peut avantageusement citer les supports monocouches en aluminium ou en alliage d'aluminium, en fonte d'aluminium, en acier inoxydable, en fonte d'acier ou en cuivre, ou les supports multicouches comprenant de l'extérieur vers l'intérieur les couches suivantes : acier inoxydable ferritique / aluminium / acier inoxydable austénitique ou encore acier inoxydable / aluminium / cuivre / aluminium / acier inoxydable austénitique, ou encore une calotte d'aluminium de fonderie, d'aluminium ou d'alliages d'aluminium doublée d'un fond extérieur en acier inoxydable.

La présente invention a encore pour objet un procédé tel que revendiqué pour réaliser un article tel que défini ci-dessus, ledit procédé comprenant les étapes suivantes :
a) la fourniture d'un support présentant au moins deux faces opposées ;
b) la préparation d'une composition sol-gel comprenant b1) la préparation d'une composition sol-gel aqueuse comprenant au moins un précurseur sol-gel de type alcoxyde métallique, b2) l'hydrolyse dudit précurseur sol-gel par introduction d'eau et d'un catalyseur acide ou basique, et enfin b3) une réaction de condensation engendrant la formation d'un alcool pour obtenir la composition sol-gel ;
c) la préparation d'une composition sol-gel hybride comprenant c1) la préparation d'un mélange comprenant en milieu solvant au moins une résine silicone et au moins un silane et/ou au moins un alcoxyde métallique, et c2) une réaction de condensation pour obtenir la composition sol-gel hybride ;
d) l'application sur l'une au moins des faces du support d'au moins une couche de la composition sol-gel obtenue à l'étape b) pour former un revêtement sol-gel comprenant au moins une couche sol-gel se présentant sous forme d'un film continu ;
e) l'application, partielle ou continue, par sérigraphie sur ledit revêtement sol-gel, d'au moins une couche de la composition sol-gel hybride obtenue à l'étape c) pour former une première couche sol-gel hybride sérigraphique ; puis
f) la cuisson de l'ensemble à une température comprise entre 150°C et 350°C.

Le procédé selon l'invention est simple et facilement intégrable dans le flux de production.

La résine silicone, le silane et l'alcoxyde métallique utilisables dans la composition sol-gel hybride sont tels que définis précédemment.

De même, l'article et le support sont tels que définis ci-dessus.

Le support sur lequel on réalise le revêtement sol-gel et le revêtement sol-gel hybride selon l'invention peut être :
- soit un support présentant la forme finale de l'article, et notamment, dans le cas d'un article culinaire, avec une face intérieure apte à recevoir des aliments et une face extérieure destinée à être disposée du côté d'une source de chaleur,
- soit un disque (donc essentiellement plan) qui est, préalablement à son enduction par lesdits revêtements selon l'invention, mis en forme, par exemple par frappe à froid, pour obtenir une calotte, puis découpé.

Selon un mode de réalisation particulier du procédé selon l'invention, le support se présente sous la forme d'un disque et le procédé comprend en outre une étape de formage du support avant l'étape d) d'application de la composition sol-gel. Selon un mode de réalisation avantageux du procédé selon l'invention, la face du support, destinée à être revêtue, peut être préalablement soumise à l'un au moins d'un dégraissage, d'un sablage et d'un traitement de surface spécifique à la nature de l'article afin d'améliorer l'adhésion du revêtement sol-gel sur le support.

Selon un mode de réalisation avantageux du procédé selon l'invention, la surface du revêtement sol-gel appliqué à l'étape d) peut être soumise à un traitement de surface spécifique préalablement à l'application de la composition sol-gel hybride à l'étape e) afin d'améliorer l'adhésion du revêtement sol-gel hybride sur le revêtement sol-gel.

Avantageusement, un traitement de surface utilisable selon l'invention pour traiter la surface du revêtement sol-gel est un traitement de surface par plasma froid.

Le traitement de surface par plasma froid peut être avantageusement réalisé en travaillant avec de l'ammoniac dans le plasma. Dans le cas où le revêtement sol-gel hybride comprend une résine silicone polyester, les groupements amines de surface créés par le plasma ammoniac pourront réagir avec les groupements fonctionnels libres résiduels du polyester de la résine lors de l'application de la première couche sol-gel hybride.

Une autre possibilité de traitement de surface par plasma froid est d'utiliser un plasma (N₂/H₂) qui va permettre de créer des groupements -N en surface du revêtement sol-gel pour établir des liaisons silazanes (Si-N) entre le revêtement sol-gel et la première couche sol-gel hybride.

Selon un mode de réalisation du procédé selon l'invention, pour améliorer l'adhésion du revêtement sol-gel hybride sur le revêtement sol-gel, il est possible d'utiliser un agent de couplage, par exemple un aminosilane tel que le (3-aminopropyl)triéthoxysilane (APTES), que l'on peut :
- soit incorporer directement dans la composition sol-gel hybride comprenant une résine silicone polyester (pour se greffer au polyester de la résine, la partie silane pouvant ensuite réagir par condensation avec les hydroxyles de surface du revêtement sol-gel) lors de la préparation de l'étape c),
- soit déposer sur le revêtement sol-gel en présence de toluène anhydre avant l'application de l'étape e).

L'étape b) de préparation de la composition sol-gel est réalisée de manière classique, par exemple comme décrit dans le document brevet FR 2973390.

Pour la préparation b1) de la composition aqueuse sol-gel, on utilisera de préférence à titre de précurseur un alcoxyde métallique choisi parmi :
- les précurseurs répondant à la formule générale M₁(OR₁)ₙ,
- les précurseurs répondant à la formule générale M₂(OR₂)₍ₙ₋₁₎R₂', et
- les précurseurs répondant à la formule générale M₃(OR₃)₍ₙ₋₂₎R₃'₂, avec :
   - R₁, R₂, R₃ ou R₃' désignant un groupement alkyl,
   - R₂' désignant un groupement alkyl ou phényl,
   - n étant un nombre entier correspondant à la valence maximale des métaux M₁, M₂ ou M₃, et
   - M₁, M₂, ou M₃ désignant un métal, un métal de transition ou un non métal choisi parmi Si, Zr, Ti, Sn, AI, Ce, V, Nb, Hf, Mg ou les lanthanides.

Avantageusement, l'alcoxyde métallique de la composition aqueuse sol-gel de l'étape b1) est un alcoxysilane.

A titre d'alcoxysilanes utilisables dans la composition aqueuse sol-gel de l'étape b1) du procédé de l'invention, on peut notamment citer le méthyl(triméthoxy)silane (MTMS), le tétraéthoxysilane (TEOS), le méthyl(triéthoxy)silane (MTES), le diméthyl(diméthoxy)silane, et leurs mélanges.

De manière préférée, on utilisera les alcoxysilanes MTES et TEOS, car ils présentent l'avantage de ne pas contenir de groupements méthoxy. En effet, l'hydrolyse des méthoxy conduit à la formation de méthanol dans la formulation sol-gel, ce qui, compte tenu de son classement toxique, nécessite des précautions supplémentaires lors de l'application. A contrario, l'hydrolyse des groupements éthoxy ne génère que de l'éthanol possédant un classement plus favorable et donc des prescriptions d'utilisation moins contraignantes pour le revêtement sol-gel.

Le milieu solvant utilisé lors de la préparation de l'étape cl) peut avantageusement comprendre au moins un solvant organique léger à titre de diluant et au moins un solvant organique lourd à titre d'agent humectant.

Ces solvants (tant les solvants lourds que légers) permettent à la composition sol-gel hybride (également appelée « encre de sérigraphie ») de ne pas sécher dans le maillage de l'écran de sérigraphie (grâce à l'action du solvant lourd) et d'obtenir un séchage de la composition plus rapide en surface pour réaliser des sérigraphies multicouches (grâce à l'évaporation rapide du solvant léger).

Les solvants lourds utilisés dans la composition sol-gel hybride selon l'invention peuvent avantageusement être choisis parmi les polyols (notamment les diols, les esterdiols, éther-diols ou les polyphénols) et les dérivés terpéniques (par exemple le terpinéol). Les solvants organiques lourds selon l'invention présentent typiquement une masse moléculaire élevée (égale ou supérieure à 100 g.mol⁻¹) et un point d'ébullition élevé (notamment égal ou supérieur à 150°C).

Les solvants légers utilisés dans la composition sol-gel hybride selon l'invention peuvent avantageusement être choisis parmi les solvants polaires ayant un point d'ébullition inférieur ou égal à 150°C.

Le solvant léger utilisé est de préférence le xylène car il est déjà présent dans la résine silicone polyester. Celle-ci est aussi soluble dans les esters, cétones et éthers de glycol.

Dans le cas où la composition sol-gel hybride comprend un silane, ledit silane aura été de préférence pré-hydrolysé.

Dans le cas où la composition sol-gel hybride comprend un alcoxyde métallique, ledit alcoxyde métallique aura été de préférence pré-hydrolysé en présence d'eau et d'un acide, tel que l'acide formique ou l'acide acétique. Avantageusement, cette étape de pré-hydrolyse de l'alcoxyde métallique peut être précédée d'une étape de chélation de l'alcoxyde métallique avec un agent chélatant tel que l'acétylacétonate (ACAC) ou l'éthylacétoacétate (EAA).

En outre, dans le cas où la composition sol-gel hybride comprend à la fois un silane et un alcoxyde métallique, l'un au moins du silane et de l'alcoxyde métallique aura été de préférence pré-hydrolysé.

Le procédé selon l'invention peut avantageusement comprendre, juste après l'étape c), une étape c') d'ajustement de la viscosité de la composition sol-gel hybride à une valeur comprise entre 0,2 Pa.s et 5 Pa.s (entre 2 et 50 Poises), et de préférence à une valeur comprise entre 0,5 Pa.s et 2 Pa.s (entre 5 et 20 Poises).

Pour cela, la composition sol-gel hydride peut être avantageusement épaissie à l'aide d'une cellulose, modifiée ou non, et de préférence une éthyl-cellulose (par exemple celle commercialisée sous la marque Dow Ethocel STD300^{®}), afin d'en augmenter la viscosité et d'en faciliter le dépôt par sérigraphie.

L'ajout, à la composition sol-gel hybride, d'autres épaississants organiques d'une nature différente, comme la gomme de xanthane, ou des argiles (par exemple celle commercialisée sous la marque Bentone SD^{®}-2) ou encore des additifs rhéologiques thixotropes de type urée modifiée, pourra également être envisagé pour ajuster la rhéologie de la composition sol-gel hybride souhaitée.

Il est par ailleurs également possible d'ajouter au moins une charge pigmentaire et/ou au moins une charge renforçante dans la composition sol-gel hybride, juste après l'étape c) de préparation.

Les charges pigmentaire(s) et/ou renforçante(s) sont telles que définies précédemment.

La composition aqueuse sol-gel pourra s'appliquer en monocouche ou en multicouches, sur le revêtement sol-gel.

L'application de l'étape d) de la composition sol-gel peut se faire par toute technique adaptée connue de l'homme du métier. Par exemple, cette application de la composition sol-gel peut être faite par pulvérisation, par trempage, par immersion *(« dip coating »)* ou par étalement *(« spin coating »)* de la composition sol-gel sur la face du support devant être revêtue.

Avantageusement, l'étape d) d'application de la composition sol-gel peut comprendre en outre le séchage du revêtement sol-gel, par exemple un séchage par rayonnement infrarouge à une température comprise entre 50°C et 100°C.

L'application de l'étape e) d'application de la composition sol-gel hybride se fait avantageusement par sérigraphie sur le revêtement sol-gel obtenu à l'étape d). La composition sol-gel hybride peut être appliquée en monocouche ou en multicouches.

Avantageusement, l'étape e) peut comprendre en outre le séchage du revêtement sol-gel hybride, par exemple un séchage par rayonnement infrarouge à une température comprise entre 50°C et 100°C.

L'étape f) de cuisson peut être avantageusement réalisée dans un four à convection classique en atmosphère classique, inerte ou oxydante.

De préférence, la cuisson de l'étape f) est réalisée à une température comprise entre 200°C à 300°C.

D'autres avantages et particularités de la présente invention résulteront de la description qui va suivre, donnée à titre d'exemple non limitatif et faite en référence aux exemples et aux figures annexées correspondantes :
- la figure 1 représente une vue schématique en coupe d'un article culinaire selon un mode de réalisation de l'art antérieur,
- la figure 2 représente une vue schématique en coupe d'un article culinaire selon un autre mode de réalisation de l'art antérieur,
- la figure 3 représente une vue schématique en coupe d'un article culinaire conforme à l'invention selon une première variante de réalisation,
- la figure 4 représente une vue schématique en coupe d'un article culinaire conforme à l'invention selon une deuxième variante de réalisation, et
- la figure 5 représente une vue schématique en coupe d'un article culinaire conforme à l'invention selon une troisième variante de réalisation.

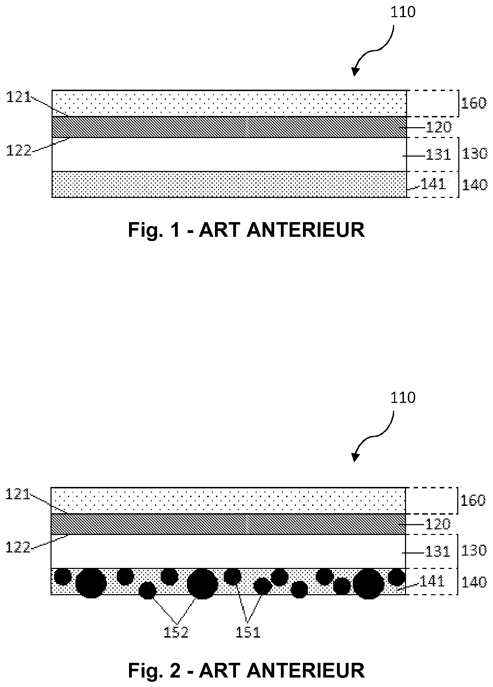

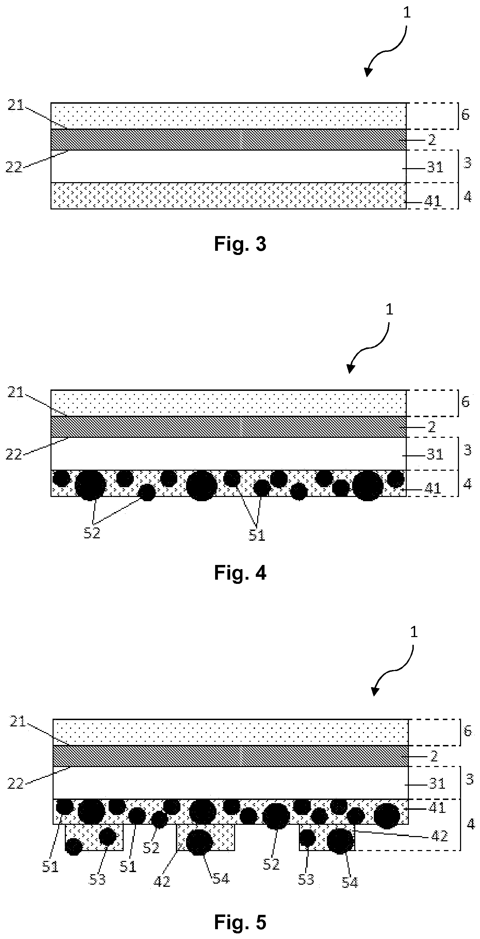

Les éléments identiques représentés sur les figures 1 et 2, et sur les figures 3 à 5 respectivement sont identifiés par des références numériques identiques.

La figure 1 (correspondant aux conditions de l'exemple comparatif 3) représente une vue en coupe d'un article culinaire 110 selon un mode de réalisation de l'art antérieur. Cet article culinaire 110 comprend un support 120 en aluminium, présentant deux faces opposées 121 (face intérieure) et 122 (face extérieure). La face intérieure 121 est revêtue d'un revêtement anti-adhésif 160, par exemple un revêtement à base de résine fluorocarbonée, d'émail ou d'un matériau sol-gel.

La face extérieure 122 est recouverte d'un premier revêtement sol-gel 130 comprenant une couche sol-gel 131 se présentant sous forme d'un film continu d'un matériau sol-gel comprenant une matrice d'au moins un polyalcoxylate métallique. Enfin, le premier revêtement sol-gel 130 est recouvert d'un second revêtement sol-gel 140 comprenant une couche sol-gel 141 conforme à l'enseignement de l'exemple 13 du document brevet US 6,863,923.

La figure 2 (correspondant aux conditions de l'exemple comparatif 4) représente une vue en coupe d'un article culinaire 110 selon un autre mode de réalisation de l'art antérieur. Cet article culinaire 110 comprend un support 120 en aluminium, présentant deux faces opposées 121 (face intérieure) et 122 (face extérieure). La face intérieure 121 est revêtue d'un revêtement anti-adhésif 160, par exemple un revêtement à base de résine fluorocarbonée, d'émail ou d'un matériau sol-gel.

La face extérieure 122 est recouverte d'un premier revêtement sol-gel 130 comprenant une couche sol-gel 131 se présentant sous forme d'un film continu d'un matériau sol-gel comprenant une matrice d'au moins un polyalcoxylate métallique. Enfin, le premier revêtement sol-gel 130 est recouvert, par sérigraphie, d'un second revêtement sol-gel 140 comprenant une couche sol-gel 141 conforme à l'enseignement du document brevet FR 2973390 comprenant des billes en acier inoxydable 151, 152, dont une partie 152 fait saillie à la surface du second revêtement sol-gel 140.

L'article illustré sur la figure 3 annexée est un article culinaire 1 selon un premier mode de réalisation de l'invention. L'article culinaire 1 illustré sur la figure 3 correspond aux conditions des exemples 2 et 7.

Cet article culinaire 1 comprend un support 2 en aluminium, présentant deux faces opposées 21 (face intérieure) et 22 (face extérieure). La face intérieure 21 est revêtue d'un revêtement anti-adhésif 6, par exemple un revêtement à base de résine fluorocarbonée, d'émail ou d'un matériau sol-gel.

La face extérieure 22 est recouverte d'un revêtement sol-gel 3 comprenant une couche sol-gel 31 se présentant sous forme d'un film continu d'un matériau sol-gel comprenant une matrice d'au moins un polyalcoxylate métallique. Enfin, le revêtement sol-gel 3 est recouvert, par sérigraphie, d'un revêtement sol-gel hybride 4 comprenant une couche sol-gel hybride 41 conforme à la présente invention.

L'article illustré sur la figure 4 annexée est un article culinaire 1 selon un deuxième mode de réalisation de l'invention. L'article culinaire 1 illustré sur la figure 3 correspond aux conditions des exemples 3, 5, 6 et 8 à 10.

Dans la variante illustrée sur la figure 4, la couche sol-gel hybride 41 du revêtement sol-gel hybride 4 comprend des billes métalliques 51, 52, dont certaines 52 font saillie à la surface de cette couche sol-gel hybride 41.

L'article illustré sur la figure 5 annexée est un article culinaire 1 selon un troisième mode de réalisation de l'invention.

Dans la variante illustrée sur la figure 5, le revêtement sol-gel hybride 4 comprend deux couches sol-gel hybrides 41, 42. La première couche sol-gel hybride 41 est appliquée de manière continue par sérigraphie sur le revêtement sol-gel 3. La seconde couche sol-gel hybride 42 est appliquée par sérigraphie de manière discontinue sur la première couche sol-gel hybride 41. Ces deux couches sol-gel hybrides 41, 42 comprennent des billes métalliques 51, 52, 53, 54, dont certaines 52, 54 font saillie à la surface de ces couches sol-gel hybrides 41, 42 respectivement.

### EXEMPLES

Dans ces exemples, sauf indication contraire, tous les pourcentages et parties sont exprimés en poids.

### Tests

### Tenue à la flamme :

Les revêtements préparés dans les exemples ci-dessous ont été soumis à l'action de la flamme d'un bec Bünsen pendant 20 secondes, puis refroidis par une trempe à l'eau froide. A l'issue de ce flammage des revêtements, l'aspect général de chaque revêtement a été évalué. On a noté en particulier la présence de traces d'oxydation (généralement blanc/brun) ou de carbonisation (généralement noires).

### Test d'adhérence (issu du test de norme EN 10209) :

Le test Erichsen norme EN 10209 destiné aux émaux a été appliqué aux revêtements de type sol-gel préparés dans les exemples ci-dessous. Un choc a été appliqué à l'aide d'une ogive par énergie potentielle à la surface de chaque revêtement. A l'issue de ce test, la cohésion résiduelle de chaque revêtement sur son support métallique a été analysée.

### Test d'abrasion (issu du test de norme NFD 21-511) :

La résistance à l'abrasion des revêtements de type sol-gel préparés dans les exemples ci-dessous a été évaluée en soumettant ceux-ci à l'action d'un tampon abrasif de type SCOTCH BRITE (marque déposée) vert. La résistance à l'abrasion de chaque revêtement a été estimée qualitativement en fonction du nombre de passages au tampon nécessaires pour créer la première rayure (correspondant à l'apparition du métal constitutif du support).

### Test de rayure sur plaque de cuisson en vitrocéramique :

Ce test a pour but de caractériser la non détérioration des plaques vitrocéramiques. Il permet de vérifier qu'une poêle ne raye pas la plaque (test réalisé à froid). Ce test s'applique aux articles culinaires compatibles vitrocéramique et induction. Le matériel utilisé comprend la poêle, une plaque vitrocéramique propre et sans rayure, et un poids de 100 grammes.

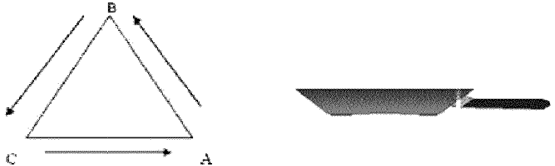

Le poids de 100 g est placé au centre de la poêle, la poêle étant disposée sur la plaque vitrocéramique. La poêle est ensuite déplacée horizontalement sur la plaque en vitrocéramique de A à B à C (voir schéma ci-dessus) pendant 10 cycles.

L'état de la plaque vitrocéramique est enfin vérifié et la présence éventuelle de rayures est notée.

### Brillance (DIN EN ISO 2813):

Utilisation d'un appareil appelé Brillancemètre (ex BYK Gardner^{®} Micro tri gloss) qu'on applique sur la surface de l'article et qui émet un flash de lumière à 60° (autres angles disponibles 20 ou 85°) afin de définir la réflexion propre à la surface. On se base sur un étalonnage à 100 UB (= unités de brillance mesurée sur un verre noir poli à l'indice de réfraction connu) et la mesure obtenue est proportionnelle à l'indice de réfraction de la surface (une mesure > 100 UB est donc possible).

### EXEMPLES REALISES (compositions et conditions expérimentales)

### EXEMPLE 1 : préparation d'un revêtement sol-gel sur un support

Une composition sol-gel SG1 a été préparée à base de précurseurs alcoxydes métalliques selon la composition indiquée dans le tableau 1 ci-après.

Cette composition SG1 a été appliquée par pulvérisation sur des supports en aluminium pour former, sur chacun, un revêtement sol-gel.

**Tableau 1 :**

| **Composants** | **Pourcentage massique (%)** |
|---|---|
| Précurseur sol-gel répondant à la formule générale M2(0R2)(n-i)R2' | 80 à 97 % |
| Précurseur sol-gel répondant à la formule générale M3(0R3)(n-2)R3¹2 | 0 à 20 % |
| Catalyseur acide ou basique | 0,1 à 5 % |
| Eau | 1 à 10 % |
| Agent chélatant (par exemple un alcool) | 0 à 10 % |

### EXEMPLE 2 : composition sol-gel hybride selon l'invention, avec silanes mais sans billes renforçantes

Une composition sol-gel hybride SGH1 selon l'invention, contenant une résine silicone et un silane mais pas de billes renforçantes, a été préparée selon la composition indiquée dans le tableau 2 ci-après.

Cette composition SGH1 a été appliquée par sérigraphie en monocouche sur le revêtement sol-gel obtenu à l'exemple 1, pour former un revêtement sol-gel hybride comprenant une couche sol-gel hybride selon l'invention.

L'ensemble a été cuit à une température comprise entre 200°C et 300°C.

**Tableau 2 :**

| **Composants** | **Pourcentage massique (%)** |
|---|---|
| Résine silicone : résine SILRES^{®} 610 commercialisée par la société WACKER | 40 à 70 % |
| Silane : aminopropylsilane | 5 à 20 % |
| Solvants : xylène et acétate de butyle (80/20) | 5 à 20 % |
| Charge : alumine | 5 à 20 % |
| Pigments minéraux : oxyde de fer, oxyde de FeCrCu | 5 à 20 % |
| Additif rhéologique cellulosique | 0 à 5 % |

### EXEMPLE 3 : composition sol-gel hybride selon l'invention, avec silanes et billes renforçantes

Une composition sol-gel hybride SGH2 selon l'invention, contenant une résine silicone, des billes renforçantes et un silane, a été préparée selon la composition indiquée dans le tableau 3 ci-après.

Les billes renforçantes utilisées étaient des billes en acier inoxydable commercialisées par la société HOGANAS sous la dénomination commerciale 316 HIC 15 µm.

Cette composition SGH2 a été appliquée par sérigraphie en monocouche sur le revêtement sol-gel obtenu à l'exemple 1, pour former un revêtement sol-gel hybride comprenant une couche sol-gel hybride selon l'invention.

L'ensemble a été cuit à une température comprise entre 200°C et 300°C.

**Tableau 3 :**

| **Composants** | **Pourcentage massique (%)** |
|---|---|
| Résine silicone : résine SILRES^{®} 610 commercialisée par la société WACKER | 40 à 70 % |
| Silane : aminopropylsilane | 5 à 20 % |
| Solvants : xylène et acétate de butyle (80/20) | 5 à 20 % |
| Charge : alumine | 5 à 20 % |
| Pigments minéraux : oxyde de fer, oxyde de FeCrCu | 5 à 20 % |
| Billes en acier inoxydable | 2 à 15 % |
| Additif rhéologique cellulosique | 0 à 5 % |

### EXEMPLE 4 : chélation et pré-hydrolyse d'un alcoxyde métallique

Une composition comprenant un alcoxyde métallique a été préparée selon la composition indiquée dans le tableau 4 ci-après afin de chélater et pré-hydrolyser ledit alcoxyde métallique.

**Tableau 4 :**

| **Composants** | **Pourcentage massique (%)** |
|---|---|
| Agent chélatant : acétylacétonate CAS 123-54-6 | 5 à 20 % |
| Alcoxyde métallique : isopropoxyde de titane CAS 548-68-9 | 40 à 60 % |
| Eau | 15 à 30 % |
| Acide acétique | 1 à 6 % |

### EXEMPLE 5 : composition sol-gel hybride selon l'invention, avec alcoxydes métalliques et billes renforçantes

Une composition sol-gel hybride SGH3 selon l'invention, contenant une résine silicone, des billes renforçantes et l'alcoxyde métallique pré-hydrolysé de l'exemple 4, a été préparée selon la composition indiquée dans le tableau 5 ci-après.

Les billes renforçantes utilisées étaient des billes en acier inoxydable commercialisées par la société HOGANAS sous la dénomination commerciale 316 HIC 15 µm.

Cette composition SGH3 a été appliquée par sérigraphie en monocouche sur le revêtement sol-gel obtenu à l'exemple 1, pour former un revêtement sol-gel hybride comprenant une couche sol-gel hybride selon l'invention.

L'ensemble a été cuit à une température comprise entre 200°C et 300°C.

**Tableau 5 :**

| **Composants** | **Pourcentage massique (%)** |
|---|---|
| Résine silicone : résine SILRES^{®} 610 commercialisée par la société WACKER | 40 à 70 % |
| Alcoxyde métallique : isopropoxyde de titane CAS 548-68-9 pré-hydrolysé (exemple 4) | 5 à 25 % |
| Solvant : butyl-glycol | 5 à 20 % |
| Charge : alumine | 5 à 20 % |
| Pigments minéraux : oxyde de fer, oxyde de FeCrCu | 5 à 20 % |
| Billes en acier inoxydable | 2 à 15 % |

### EXEMPLE 6 : composition sol-gel hybride selon l'invention, avec silanes, alcoxydes métalliques et billes renforçantes

Une composition sol-gel hybride SGH4 selon l'invention, contenant une résine silicone, des billes renforçantes ainsi qu'un silane et l'alcoxyde métallique pré-hydrolysé de l'exemple 4, a été préparée selon la composition indiquée dans le tableau 6 ci-après.

Les billes renforçantes utilisées étaient des billes en acier inoxydable commercialisées par la société HOGANAS sous la dénomination commerciale 316 HIC 15 µm.

Cette composition SGH4 a été appliquée par sérigraphie en monocouche sur le revêtement sol-gel obtenu à l'exemple 1, pour former un revêtement sol-gel hybride comprenant une couche sol-gel hybride selon l'invention.

L'ensemble a été cuit à une température comprise entre 200°C et 300°C.

**Tableau 6 :**

| **Composants** | **Pourcentage massique (%)** |
|---|---|
| Résine silicone : résine SILRES^{®} 610 commercialisée par la société WACKER | 40 à 70 % |
| Alcoxyde métallique : isopropoxyde de titane CAS 548-68-9 pré-hydrolysé (exemple 4) | 1 à 15 % |
| Silane : 3-aminopropyl-triéthoxysilane | 1 à 15 % |
| Solvant : butyl-glycol | 5 à 20 % |
| Charge : alumine | 5 à 20 % |
| Pigments minéraux : oxyde de fer, oxyde de FeCrCu | 5 à 20 % |
| Billes en acier inoxydable | 2 à 15 % |

### EXEMPLE 7 : composition sol-gel hybride selon l'invention, avec silanes mais sans billes renforçantes

Une composition sol-gel hybride SGHS selon l'invention, contenant une résine silicone polyester et un silane mais pas de billes renforçantes, a été préparée selon la composition indiquée dans le tableau 7 ci-après.

Cette composition SGHS a été appliquée par sérigraphie en monocouche sur le revêtement sol-gel obtenu à l'exemple 1, pour former un revêtement sol-gel hybride comprenant une couche sol-gel hybride selon l'invention.

L'ensemble a été cuit à une température comprise entre 200°C et 300°C.

**Tableau 7 :**

| **Composants** | **Pourcentage massique (%)** |
|---|---|
| Résine silicone polyester : résine SILIKOFTAL^{®} commercialisée par la société TEGO | 40 à 70 % |
| Silane : aminopropylsilane | 5 à 20 % |
| Solvants : xylène et acétate de butyle (80/20) | 5 à 20 % |
| Charge : alumine | 5 à 20 % |
| Pigments minéraux : oxyde de fer, oxyde de FeCrCu | 5 à 20 % |
| Additif rhéologique cellulosique | 0 à 5% |

### EXEMPLE 8 : composition sol-gel hybride selon l'invention, avec silanes et billes renforçantes

Une composition sol-gel hybride SGH6 selon l'invention, contenant une résine silicone polyester, des billes renforçantes et un silane, a été préparée selon la composition indiquée dans le tableau 8 ci-après.

Les billes renforçantes utilisées étaient des billes en acier inoxydable commercialisées par la société HOGANAS sous la dénomination commerciale 316 HIC 15 µm.

Cette composition SGH6 a été appliquée par sérigraphie en monocouche sur le revêtement sol-gel obtenu à l'exemple 1, pour former un revêtement sol-gel hybride comprenant une couche sol-gel hybride selon l'invention.

L'ensemble a été cuit à une température comprise entre 200°C et 300°C.

**Tableau 8 :**

| **Composants** | **Pourcentage massique (%)** |
|---|---|
| Résine silicone polyester : résine SILIKOFTAL^{®} commercialisée par la société TEGO | 40 à 70 % |
| Silane : aminopropylsilane | 5 à 20 % |
| Solvants : xylène et acétate de butyle (80/20) | 5 à 20 % |
| Charge : alumine | 5 à 20 % |
| Pigments minéraux : oxyde de fer, oxyde de FeCrCu | 5 à 20 % |
| Billes en acier inoxydable | 2 à 15 % |
| Additif rhéologique cellulosique | 0 à 5 % |

### EXEMPLE 9 : composition sol-gel hybride selon l'invention, avec alcoxydes métalliques et billes renforçantes

Une composition sol-gel hybride SGH7 selon l'invention, contenant une résine silicone polyester, des billes renforçantes et l'alcoxyde métallique pré-hydrolysé de l'exemple 4, a été préparée selon la composition indiquée dans le tableau 9 ci-après.

Les billes renforçantes utilisées étaient des billes en acier inoxydable commercialisées par la société HOGANAS sous la dénomination commerciale 316 HIC 15 µm.

Cette composition SGH7 a été appliquée par sérigraphie en monocouche sur le revêtement sol-gel obtenu à l'exemple 1, pour former un revêtement sol-gel hybride comprenant une couche sol-gel hybride selon l'invention.

L'ensemble a été cuit à une température comprise entre 200°C et 300°C.

**Tableau 9 :**

| **Composants** | **Pourcentage massique (%)** |
|---|---|
| Résine silicone polyester : résine SILIKOFTAL^{®} commercialisée par la société TEGO | 40 à 70 % |
| Alcoxyde métallique : isopropoxyde de titane CAS 548-68-9 pré-hydrolysé (exemple 4) | 5 à 25 % |
| Solvant : butyl-glycol | 5 à 20 % |
| Charge : alumine | 5 à 20 % |
| Pigments minéraux : oxyde de fer, oxyde de FeCrCu | 5 à 20 % |
| Billes en acier inoxydable | 2 à 15 % |

### EXEMPLE 10 : composition sol-gel hybride selon l'invention, avec silanes, alcoxydes métalliques et billes renforçantes

Une composition sol-gel hybride SGH8 selon l'invention, contenant une résine silicone polyester, des billes renforçantes ainsi qu'un silane et l'alcoxyde métallique pré-hydrolysé de l'exemple 4, a été préparée selon la composition indiquée dans le tableau 10 ci-après.

Les billes renforçantes utilisées étaient des billes en acier inoxydable commercialisées par la société HOGANAS sous la dénomination commerciale 316 HIC 15 µm.

Cette composition SGH8 a été appliquée par sérigraphie en monocouche sur le revêtement sol-gel obtenu à l'exemple 1, pour former un revêtement sol-gel hybride comprenant une couche sol-gel hybride selon l'invention.

L'ensemble a été cuit à une température comprise entre 200°C et 300°C.

**Tableau 10 :**

| **Composants** | **Pourcentage massique (%)** |
|---|---|
| Résine silicone polyester : résine SILIKOFTAL^{®} commercialisée par la société TEGO | 40 à 70 % |
| Alcoxyde métallique : isopropoxyde de titane CAS 548-68-9 pré-hydrolysé (exemple 4) | 1 à 15 % |
| Silane : 3-aminopropyl-triéthoxysilane | 1 à 15 % |
| Solvant : butyl-glycol | 5 à 20 % |
| Charge : alumine | 5 à 20 % |
| Pigments minéraux : oxyde de fer, oxyde de FeCrCu | 5 à 20 % |
| Billes en acier inoxydable | 2 à 15 % |

### EXEMPLE COMPARATIF 1 : composition sol-gel hybride, sans silanes ou alcoxydes métalliques ni billes renforçantes

Une composition sol-gel hybride SGHc1, contenant une résine silicone mais ni silanes ou alcoxydes métalliques ni billes renforçantes, a été préparée selon la composition indiquée dans le tableau 11 ci-après.

Cette composition SGHc1 a été appliquée par sérigraphie en monocouche sur le revêtement sol-gel obtenu à l'exemple 1, pour former un revêtement sol-gel hybride comprenant une couche sol-gel hybride.

L'ensemble a été cuit à une température comprise entre 200°C et 300°C.

**Tableau 11 :**

| **Composants** | **Pourcentage massique (%)** |
|---|---|
| Résine silicone : résine SILRES^{®} 610 commercialisée par la société WACKER | 40 à 70 % |
| Solvants : xylène et acétate de butyle (80/20) | 5 à 20 % |
| Charge : alumine | 5 à 20 % |
| Pigments minéraux : oxyde de fer, oxyde de FeCrCu | 5 à 20 % |
| Additif rhéologique cellulosique | 0 à 5 % |

### EXEMPLE COMPARATIF 2: composition sol-gel hybride, sans silanes ou alcoxydes métalliques ni billes renforçantes

Une composition sol-gel hybride SGHc2, contenant une résine silicone polyester mais ni silanes ou alcoxydes métalliques ni billes renforçantes, a été préparée selon la composition indiquée dans le tableau 12 ci-après.

Cette composition SGHc2 a été appliquée par sérigraphie en monocouche sur le revêtement sol-gel obtenu à l'exemple 1, pour former un revêtement sol-gel hybride comprenant une couche sol-gel hybride.

L'ensemble a été cuit à une température comprise entre 200°C et 300°C.

**Tableau 12 :**

| **Composants** | **Pourcentage massique (%)** |
|---|---|
| Résine silicone polyester : résine SILIKOFTAL^{®} commercialisée par la société TEGO | 40 à 70 % |
| Solvants : xylène et acétate de butyle (80/20) | 5 à 20 % |
| Charge : alumine | 5 à 20 % |
| Pigments minéraux : oxyde de fer, oxyde de FeCrCu | 5 à 20 % |
| Additif rhéologique cellulosique | 0 à 5 % |

### EXEMPLE COMPARATIF 3

Une composition sol-gel SGc1 à base de précurseurs alcoxydes métalliques et ne contenant pas de billes métalliques, a été préparée selon la composition indiquée dans le document brevet US 6,863,923 à l'exemple 3.

Cette composition SGc1 a été appliquée par sérigraphie en monocouche sur le revêtement sol-gel obtenu à l'exemple 1, pour former un revêtement sol-gel.

L'ensemble a été cuit à une température comprise entre 200°C et 300°C.

### EXEMPLE COMPARATIF 4

Une composition sol-gel SGc2 sérigraphique à base de précurseurs alcoxydes métalliques et comportant des billes en acier inoxydable, a été préparée conformément à l'enseignement de FR 2973390, selon la composition indiquée dans le tableau 13 ci-après.

Cette composition SGc2 a été appliquée par sérigraphie en monocouche sur le revêtement sol-gel obtenu à l'exemple 1, pour former un revêtement sol-gel.

L'ensemble a été cuit à une température comprise entre 200°C et 300°C.

**Tableau 13 :**

| **Composants** | **Pourcentage massique (%)** |
|---|---|
| Dérivés résines ou terpéniques | 20 à 50 % |
| Composition sol-gel modifiée (cf. ci-dessous) | 30 à 50 % |
| Pigments minéraux | 0 à 10 % |
| Charges sphériques en acier inoxydable | 5 à 30 % |

La composition sol-gel modifiée pour la composition SGc2 sérigraphique a été obtenue comme suit :
∘ de même que pour la composition sol-gel SG1, une composition sol-gel initiale à base d'un précurseur de type alcoxyde métallique tel que défini précédemment a été préparée ;
∘ cet alcoxyde métallique a ensuite été hydrolysé dans un réacteur en présence d'eau et d'un acide ou d'une base (de préférence hydroxyde de Na, K alcalins et alcalino-terreux) puis la formation d'alcool a eu lieu par une réaction de condensation ;
∘ une filtration de la composition sol-gel ainsi obtenue pourrait être nécessaire si des grains ont été formés (par exemple génération d'agglomérats formés in situ lors de la réaction d'hydrolyse-condensation des précurseurs alcoxydes métalliques, notamment si elle est réalisée par voie alcaline) lors de la réaction d'hydrolyse-condensation ;
∘ l'alcool ainsi généré lors de la réaction d'hydrolyse-condensation a été retiré de la composition sol-gel par une évaporation/distillation (améliorée par un tirage au vide) et a ensuite été remplacé par un glycol ou un dérivé terpénique (terpinéol) pour former une composition sol-gel modifiée.

La composition sol-gel modifiée a ensuite été mélangée avec une cellulose (Dow Ethocel STD 20^{®}) afin d'en augmenter la viscosité et en faciliter l'application par sérigraphie. Une viscosité cible de 0,5 à 5 Pa.s. (soit entre 5 et 50 Poises) était visée. L'ajout d'autres liants, comme des liants organiques de type CMC ou de la gomme de xanthane, pourrait être utile pour ajuster la rhéologie souhaitée de la pâte sérigraphie.

Dans une dernière étape, les charges métalliques (Hoganas 316 HIC 15 µm) sont ajoutées par dispersion afin d'obtenir la composition SGc2.

### RESULTATS DES TESTS REALISES

Les supports revêtus obtenus dans les exemples 2, 3 et 5 à 10 et dans les exemples comparatifs 1 à 4 ont été soumis aux tests de tenue à la flamme, d'adhérence, d'abrasion, de rayure sur plaque de cuisson en verre et de brillance décrits ci-dessus. Les résultats à ces différents tests sont indiqués dans le tableau 14 ci-après.

**Tableau 14 (Résultats) :**

| **Exemples** | **Aptitude à la sérigraphie** | **Adhérence** | **Flammage** | **Abrasion** | **Test rayure sur plaque de cuisson en verre** | **Brillanc e (en pts à un angle _{∘}** |
|---|---|---|---|---|---|---|
| **2** SG1 + SGH1 | acceptable | acceptable | bonne | très bonne | légères rayures | 110 |
| **3** SG1 + SGH2 | acceptable | acceptable | bonne | très bonne | bon | 80 |
| **5** SG1 + SGH3 | n/d | très bonne | n/d | bonne | bon | 60 |
| **6** SG1 + SGH4 | n/d | très bonne | n/d | bonne | bon | 80 |
| **7** SG1 + SGH5 | excellente | très bonne | bonne | très bonne | légères rayures | 100 |
| **8** SG1 + SGH6 | excellente | très bonne | bonne | bonne | bon | 80 |
| **9** SG1 + SGH7 | n/d | très bonne | n/d | bonne | bon | 60 |
| **10** SG1 + SGH8 | n/d | très bonne | n/d | bonne | bon | 80 |
| **Comparatif 1** SG1 + SGHc1 | acceptable | acceptable | bonne | bonne | quelques rayures | 110 |
| **Comparatif 2** SG1 + SGHc2 | excellente | bonne | bonne | bonne | quelques rayures | 110 |
| **Comparatif 3** SG1 + SGc1 | excellente | excellente | excellente | pas bonne | rayures | 15 |
| **Comparatif 4** SG1 + SGc2 | excellente | excellente | excellente | rayure | bon | 15 |

Les résultats du tableau 14 montrent que les revêtements sol-gel hybrides selon l'invention (exemples 2, 3 et 5 à 10) peuvent être appliqués par sérigraphie, et présentent globalement une adhérence acceptable sur le revêtement sol-gel sousjacent. Leurs propriétés de résistance à la flamme sont également bonnes. Par contre, contrairement aux revêtements sol-gels traditionnels à base de précurseurs alcoxydes métalliques (exemples comparatifs 3 et 4), ils résistent à l'abrasion et peuvent donc être utilisés sur des plaques vitrocéramiques, et ce sans nécessairement ajouter des billes métalliques (cf. exemples 2 et 7).

La comparaison de l'exemple 2 à l'exemple comparatif 1 (résine silicone simple) d'une part et l'exemple 7 à l'exemple comparatif 2 (résine silicone polyester) d'autre part montre que l'ajout de silane dans la composition de revêtement hybride améliore la résistance à l'abrasion.

La comparaison des exemples 2 et 3 (résine silicone simple avec silanes) d'une part et des exemples 7 et 8 (résine silicone polyester avec silanes) d'autre part montre que l'ajout de billes renforçantes dans la composition de revêtement sol-gel hybride contenant déjà des silanes améliore encore davantage la résistance à l'abrasion.

La comparaison des exemples 2 (résine silicone simple) et 7 (résine silicone polyester) montre que le passage d'une résine silicone simple à une résine silicone polyester permet d'améliorer encore l'aptitude à la sérigraphie.

## Revendications

1. Article (1) comprenant un support (2) présentant deux faces opposées (21, 22), dont l'une au moins est munie d'un revêtement sol-gel (3) comprenant au moins une couche (31) sol-gel se présentant sous forme d'un film continu d'un matériau sol-gel comprenant une matrice formée à partir d'une composition sol-gel aqueuse comprenant au moins un précurseur sol-gel de type alcoxyde métallique choisi parmi :
- les précurseurs répondant à la formule générale M₁(OR₁)ₙ,
- les précurseurs répondant à la formule générale M₂(OR₂)(ₙ₋₁)R₂', et
- les précurseurs répondant à la formule générale M₃(OR₃)(ₙ₋₂)R₃'₂, avec :
• R₁, R₂, R₃ ou R₃' désignant un groupement alkyl,
• R₂' désignant un groupement alkyl ou phényl,
• n étant un nombre entier correspondant à la valence maximale des métaux M₁, M₂ ou M₃, et
• M₁, M₂, ou M₃ désignant un métal, un métal de transition ou un non métal choisi parmi Si, Zr, Ti, Sn, Al, Ce, V, Nb, Hf, Mg ou les lanthanides,
**caractérisé en ce que** ledit article (1) comporte en outre un revêtement sol-gel hybride (4) comprenant au moins une première couche (41) sol-gel hybride sérigraphique recouvrant complètement ou partiellement ledit revêtement sol-gel, ladite première couche (41) sol-gel hybride étant constituée d'un matériau sol-gel hybride comprenant une matrice formée à partir d'une première composition sol-gel hybride comprenant au moins une résine silicone et au moins un silane et/ou au moins un alcoxyde métallique,
l'alcoxyde métallique étant RiMX₍ₙ₋ᵢ₎ dans lequel :
- M est un métal ou métal de transition,
- n est la valence du métal ou métal de transition M,
- X est un groupement hydrolysable, les Xᵢ pouvant être identiques ou différents,
- R est un groupement alkyl, phényl ou organofonctionnel, les Rᵢ pouvant être identiques ou différents, et
- i = 0, 1, ... ou n-1 ; et
le silane étant RᵢSiX₍₄₋ᵢ₎ dans lequel :
- X est un groupement hydrolysable, les Xᵢ pouvant être identiques ou différents,
- R est un groupement alkyl, phényl ou organofonctionnel, les Rᵢ pouvant être identiques ou différents, et
- i = 0, 1, 2 ou 3 ; et
**caractérisé en ce que** la résine silicone est présente à raison de 40 à 70 % en poids par rapport au poids total de la première composition sol-gel hybride.

2. Article (1) selon la revendication 1, dans lequel la résine silicone est une résine silicone polyester.

3. Article (1) selon l'une quelconque des revendications précédentes, dans lequel ladite première couche (41) sol-gel hybride est partiellement recouverte par une deuxième couche (42) sol-gel hybride sérigraphique discontinue, qui est constituée d'un matériau sol-gel hybride comprenant une matrice formée à partir d'une deuxième composition sol-gel hybride comprenant au moins une résine silicone et au moins un silane et/ou au moins un alcoxyde métallique.

4. Article (1) selon l'une quelconque des revendications précédentes, dans lequel le matériau sol-gel hybride de la ou des couches (41, 42) sol-gel hybrides comprend en outre au moins une charge pigmentaire et/ou au moins une charge renforçante.

5. Article (1) selon la revendication 4, dans lequel la charge renforçante comprend des billes métalliques (51, 52, 53, 54), dont une partie (52, 54) fait saillie sur ledit revêtement sol-gel hybride (4), les billes faisant saillie étant réparties de manière homogène à la surface dudit revêtement sol-gel hybride.

6. Article (1) selon la revendication 5, dans lequel la densité surfacique des billes métalliques (51, 52, 53, 54) qui font saillie sur ledit revêtement sol-gel hybride (4) est comprise entre 50 et 300 charges/mm².

7. Article (1) selon l'une quelconque des revendications 5 et 6, dans lequel la quantité de billes métalliques (51, 52, 53, 54) dans chaque couche sol-gel hybride (41, 42) est comprise entre 0,01% et 5% en poids par rapport au poids de ladite couche (41, 42).

8. Article (1) selon l'une quelconque des revendications précédentes, qui constitue un article culinaire (1), la face (22) du support (2) de l'article (1), munie du revêtement sol-gel et du revêtement sol-gel hybride, étant la face extérieure du support (2) destinée à être disposée du côté d'une source de chaleur, et la face (21) du support (2) opposée à la face (22) étant la face intérieure (21) du support (2) apte à recevoir des aliments.

9. Procédé pour réaliser un article tel que défini selon l'une quelconque des revendications 1 à 8, ledit procédé comprenant les étapes suivantes :
a) la fourniture d'un support (2) présentant au moins deux faces opposées (21, 22) ;
b) la préparation d'une composition sol-gel comprenant b1) la préparation d'une composition sol-gel aqueuse comprenant au moins un précurseur sol-gel de type alcoxyde métallique, b2) l'hydrolyse dudit précurseur sol-gel en présence d'eau et d'un catalyseur acide ou basique, et enfin b3) une réaction de condensation engendrant la formation d'un alcool pour obtenir la composition sol-gel ;
c) la préparation d'une composition sol-gel hybride comprenant c1) la préparation d'un mélange comprenant en milieu solvant au moins une résine silicone et au moins un silane et/ou au moins un alcoxyde métallique, et c2) une réaction de condensation pour obtenir la composition sol-gel hybride ;
d) l'application sur l'une au moins des faces (21, 22) du support (2) d'au moins une couche (31) de la composition sol-gel obtenue à l'étape b) pour former un revêtement (3) sol-gel comprenant au moins une couche sol-gel se présentant sous forme d'un film continu ;
e) l'application, partielle ou continue, par sérigraphie sur ledit revêtement sol-gel, d'au moins une couche (41, 42) de la composition sol-gel hybride obtenue à l'étape c) pour former une première couche sol-gel hybride sérigraphique ; puis
f) la cuisson de l'ensemble à une température comprise entre 150°C et 350°C.

10. Procédé selon la revendication 9, dans lequel le silane et/ou l'alcoxyde métallique sont préalablement hydrolysés.

11. Procédé selon la revendication 9 ou la revendication 10, dans lequel le milieu solvant de ladite composition sol-gel hybride comprend au moins un solvant organique léger à titre de diluant, ledit solvant léger étant choisi parmi les solvants polaires ayant un point d'ébullition inférieur ou égal à 150°C, et au moins un solvant organique lourd à titre d'agent humectant, ledit solvant lourd étant choisi parmi les solvants organiques présentant une masse moléculaire supérieure ou égale à 100 g.mol⁻¹ et un point d'ébullition supérieur ou égal à 150°C.

12. Procédé selon l'une quelconque des revendications 9 à 11, comportant en outre, juste après l'étape c) une étape d'ajout d'au moins une charge pigmentaire et/ou d'au moins une charge renforçante à la composition sol-gel hybride.

## Patentansprüche

1. Artikel (1), umfassend einen Träger (2) mit zwei gegenüberliegenden Seiten (21, 22), von denen zumindest eine mit einer Sol-Gel-Beschichtung (3) versehen ist, die mindestens eine Schicht (31) aus Sol-Gel enthält, die als ein kontinuierlicher Film aus einem Sol-Gel-Material vorliegt, das eine Matrix umfasst, die aus einer wässrigen Sol-Gel-Zusammensetzung gebildet wird, die mindestens einen metallalkoxid-basierten Sol-Gel-Vorläufer beinhaltet, ausgewählt aus :
- Vorläufer, die der allgemeinen Formel M₁(OR₁)ₙ entsprechen,
- Vorläufer, die der allgemeinen Formel M₂(OR₂)(ₙ₋₁)R₂' entsprechen, und
- Vorläufer, die der allgemeinen Formel M₃(OR₃)(ₙ₋₂)R₃'₂ entsprechen, wobei :
• R₁, R₂, R₃ oder R₃' eine Alkylgruppe bezeichnet,
• R₂' eine Alkyl- oder Phenylgruppe bezeichnet,
• n eine ganze Zahl ist, die der maximalen Wertigkeit der Metalle M₁, M₂ oder M₃ entspricht, und
• M₁, M₂, oder M₃ ein Metall, ein Übergangsmetall oder ein Nichtmetall bezeichnet, ausgewählt aus Si, Zr, Ti, Sn, Al, Ce, V, Nb, Hf, Mg oder den Lanthaniden,
**dadurch gekennzeichnet, dass** das Artikel (1) ferner eine hybride Sol-Gel-Beschichtung (4) umfasst, die mindestens eine erste siebgedruckte hybride Sol-Gel-Schicht (41) beinhaltet, die die Sol-Gel-Beschichtung vollständig oder teilweise abdeckt, wobei die erste hybride Sol-Gel-Schicht (41) aus einem hybriden Sol-Gel-Material besteht, das eine Matrix umfasst, die aus einer ersten hybriden Sol-Gel-Zusammensetzung gebildet wird, die mindestens ein Silikonharz und mindestens ein Silan und/oder mindestens ein Metallalkoxid beinhaltet,
wobei das Metallalkoxid RiMX₍ₙ₋ᵢ₎ ist, worin :
- M ein Metall oder Übergangsmetall ist,
- n die Wertigkeit des Metalls oder Übergangsmetalls M ist,
- X eine hydrolysierbare Gruppe ist, wobei die Xᵢ gleich oder unterschiedlich sein können,
- R eine Alkyl-, Phenyl- oder organofunktionale Gruppe ist, wobei die Rᵢ gleich oder unterschiedlich sein können, und
- i = 0, 1,... oder n-1 ist; und
wobei das Silan ist RᵢSiX₍₄₋ᵢ₎ ist, worin :
- X eine hydrolysierbare Gruppe ist, wobei die Xᵢ gleich oder unterschiedlich sein können,
- R eine Alkyl-, Phenyl- oder organofunktionale Gruppe ist, wobei die Rᵢ gleich oder unterschiedlich sein können, und
- i = 0, 1, 2 oder 3 ist, und
**dadurch gekennzeichnet, dass** das Silikonharz zu 40 bis 70 Gew.-% bezogen auf das Gesamtgewicht der ersten hybriden Sol-Gel-Zusammensetzung vorhanden ist.

2. Artikel (1) nach Anspruch 1, wobei das Silikonharz ein Polyester-Silikonharz ist.

3. Artikel (1) nach einem der vorhergehenden Ansprüche, wobei die erste hybride Sol-Gel-Schicht (41) teilweise von einer zweiten diskontinuierlichen siebgedruckten hybriden Sol-Gel-Schicht (42) bedeckt ist, die aus einem hybriden Sol-Gel-Material besteht, das eine Matrix umfasst, die aus einer zweiten hybriden Sol-Gel-Zusammensetzung gebildet wird, welche mindestens ein Silikonharz und mindestens ein Silan und/oder mindestens ein Metallalkoxid umfasst.

4. Artikel (1) nach einem der vorhergehenden Ansprüche, wobei das hybride Sol-Gel-Material der hybriden Sol-Gel-Schichten (41, 42) ferner mindestens einen Pigmentfüllstoff und/oder mindestens eine Verstärkungsfüllstoff umfasst.

5. Artikel (1) nach Anspruch 4, wobei der Verstärkungsfüllstoff Metallkugeln (51, 52, 53, 54) umfasst, von denen ein Teil (52, 54) aus der hybriden Sol-Gel-Beschichtung (4) herausragt, wobei die herausragenden Kugeln gleichmäßig auf der Oberfläche der hybriden Sol-Gel-Beschichtung verteilt sind.

6. Artikel (1) nach Anspruch 5, wobei die Oberflächendichte der Metallkugeln (51, 52, 53, 54), die aus der hybriden Sol-Gel-Beschichtung (4) herausragen, zwischen 50 und 300 Füllstoffen/mm² liegt.

7. Artikel (1) nach einem der Ansprüche 5 und 6, wobei die Menge der Metallkugeln (51, 52, 53, 54) in jeder hybriden Sol-Gel-Schicht (41, 42) zwischen 0,01% und 5 Gew.% bezogen auf das Gewicht der Schicht (41, 42) liegt.

8. Artikel (1) nach einem der vorhergehenden Ansprüche, der ein Kochartikel (1) darstellt, wobei die Seite (22) des Trägers (2) des Artikels (1), die mit der Sol-Gel-Beschichtung und der hybriden Sol-Gel-Beschichtung ausgestattet ist, die Außenseite des Trägers (2) ist, die dazu bestimmt ist, zur Seite einer Wärmequelle gelegt zu werden, und die gegenüberliegende Seite (21) des Trägers (2) die Innenseite (21) des Trägers (2) ist, die dazu geeignet ist, Lebensmittel aufzunehmen.

9. Verfahren zur Herstellung eines Artikels wie nach einem der Ansprüche 1 bis 8 definiert, wobei das Verfahren die folgenden Schritte umfasst:
a) Bereitstellung eines Trägers (2) mit mindestens zwei gegenüberliegenden Seiten (21, 22);
b) Herstellung einer Sol-Gel-Zusammensetzung umfassend b1) die Herstellung einer wässrigen Sol-Gel-Zusammensetzung, die mindestens einen metallalkoxid-basierten Sol-Gel-Vorläufer umfasst, b2) Hydrolyse des Sol-Gel-Vorläufers in Gegenwart von Wasser und einem sauren oder basischen Katalysator, und schließlich b3) eine Kondensationsreaktion, die die Bildung eines Alkohols zur Erzeugung der Sol-Gel-Zusammensetzung verursacht;
c) Herstellung einer hybriden Sol-Gel-Zusammensetzung, umfassend c1) die Herstellung einer Mischung im Lösungsmittelmedium, die mindestens ein Silikonharz und mindestens ein Silan und/oder mindestens ein Metallalkoxid umfasst, und c2) eine Kondensationsreaktion zur Erzeugung der hybriden Sol-Gel-Zusammensetzung;
d) Anwendung von mindestens einer Schicht (31) der bei Schritt b) erhaltenen Sol-Gel-Zusammensetzung auf mindestens eine der Seiten (21, 22) des Trägers (2), um eine Sol-Gel-Beschichtung (3) zu bilden, die mindestens eine Sol-Gel-Schicht als ein kontinuierlicher Film enthält;
e) teilweise oder kontinuierliche Anwendung durch Siebdruck auf der Sol-Gel-Beschichtung von mindestens einer Schicht (41, 42) der bei Schritt c) erhaltenen hybriden Sol-Gel-Zusammensetzung zur Bildung einer ersten Siebdruck-Hybrid-Sol-Gel-Schicht; und dann
f) das gesamte bei einer Temperatur von 150°C bis 350°C backen.

10. Verfahren nach Anspruch 9, wobei das Silan und/oder das Metallalkoxid vorab hydrolysiert sind.

11. Verfahren nach Anspruch 9 oder Anspruch 10, wobei das Lösungsmittelmedium der hybriden Sol-Gel-Zusammensetzung mindestens ein leichtes organisches Lösungsmittel als Verdünnungsmittel enthält, wobei das leichte Lösungsmittel aus polaren Lösungsmitteln ausgewählt wird, die einen Siedepunkt von 150°C oder weniger aufweisen, und mindestens ein schweres organisches Lösungsmittel als Benetzungsmittel, wobei das schwere Lösungsmittel aus organischen Lösungsmitteln ausgewählt wird, die eine Molekulargewicht von 100 g/ mol⁻¹ oder mehr und einen Siedepunkt von 150°C oder mehr aufweisen.

12. Verfahren nach einem der Ansprüche 9 bis 11, das ferner unmittelbar nach Schritt c) einen Schritt der Zugabe von mindestens einem Pigmentfüllstoff und/oder mindestens einem Verstärkungsfüllstoff zur hybriden Sol-Gel-Zusammensetzung umfasst.

## Claims

1. Article (1) comprising a support (2) with two opposing faces (21, 22), at least one of which is provided with a sol-gel coating (3) comprising at least one sol-gel layer (31) in the form of a continuous film of a sol-gel material including a matrix formed from an aqueous sol-gel composition comprising at least one metal alkoxide-type sol-gel precursor selected from:
- precursors corresponding to the general formula M₁(OR₁)ₙ,
- precursors corresponding to the general formula M₂(OR₂)(ₙ₋₁)R₂', and
- precursors corresponding to the general formula M₃(OR₃)(ₙ₋₂)R₃'₂, where:
• R₁, R₂, R₃ or R₃' designates an alkyl group,
• R₂' designates an alkyl or phenyl group,
• n is an integer corresponding to the maximum valence of the metals M₁, M₂, or M₃, and
• M₁, M₂, or M₃ designates a metal, transition metal, or non-metal selected from Si, Zr, Ti, Sn, Al, Ce, V, Nb, Hf, Mg, or lanthanides,
**characterized in that** said article (1) further comprises a hybrid sol-gel coating (4) comprising at least one first screen-printing hybrid sol-gel layer (41) entirely or partially covering said sol-gel coating, said first hybrid sol-gel layer (41) consisting of a hybrid sol-gel material comprising a matrix formed from a first hybrid sol-gel composition including at least one silicone resin and at least one silane and/or at least one metal alkoxide,
where the metal alkoxide is RiMX₍ₙ₋ᵢ₎ in which:
- M is a metal or transition metal,
- n is the valence of the metal or transition metal M,
- X is a hydrolysable group, the Xᵢ being identical or different,
- R is an alkyl, phenyl or organofunctional group, the Rᵢ being identical or different, and
- i = 0, 1, ..., or n-1; and
where the silane is RᵢSiX₍₄₋ᵢ₎ in which:
- X is a hydrolysable group, the Xᵢ being identical or different,
- R is an alkyl, phenyl or organofunctional group, the Rᵢ being identical or different, and
- i = 0, 1, 2 or 3; and
**characterized in that** the silicone resin is present in an amount of 40 to 70% by weight relative to the total weight of the first hybrid sol-gel composition.

2. Article (1) according to claim 1, wherein the silicone resin is a silicone polyester resin.

3. Article (1) according to any one of the preceding claims, wherein said first hybrid sol-gel layer (41) is partially covered by a second discontinuous screen-printing hybrid sol-gel layer (42), which consists of a hybrid sol-gel material comprising a matrix formed from a second hybrid sol-gel composition including at least one silicone resin and at least one silane and/or at least one metal alkoxide.

4. Article (1) according to any one of the preceding claims, wherein the hybrid sol-gel material of the hybrid sol-gel layer(s) (41, 42) further comprises at least one pigment filler and/or at least one reinforcing filler.

5. Article (1) according to claim 4, wherein the reinforcing filler comprises metal beads (51, 52, 53, 54), part (52, 54) of which protrudes from said hybrid sol-gel coating (4), the protruding beads being uniformly distributed on the surface of said hybrid sol-gel coating.

6. Article (1) according to claim 5, wherein the surface density of the metal beads (51, 52, 53, 54) protruding from said hybrid sol-gel coating (4) is between 50 and 300 fillers/mm².

7. Article (1) according to any of claims 5 and 6, wherein the quantity of metal beads (51, 52, 53, 54) in each hybrid sol-gel layer (41, 42) is between 0.01% and 5% by weight relative to the weight of said layer (41, 42).

8. Article (1) according to any of the preceding claims, which constitutes a culinary article (1), the face (22) of the support (2) of the article (1), provided with the sol-gel coating and the hybrid sol-gel coating, being the exterior face of the support (2) intended to be positioned on the side of a heat source, and the face (21) of the support (2) opposite the face (22) being the interior face (21) of the support (2) suitable for receiving food.

9. Method for producing an article as defined in any of claims 1 to 8, said method comprising the following steps:
a) providing a support (2) with at least two opposing faces (21, 22);
b) preparing a sol-gel composition including b1) preparing an aqueous sol-gel composition comprising at least one metal alkoxide-type sol-gel precursor, b2) hydrolyzing said sol-gel precursor in the presence of water and an acid or basic catalyst, and finally b3) a condensation reaction resulting in the formation of an alcohol to obtain the sol-gel composition;
c) preparing a hybrid sol-gel composition comprising c1) preparing a mixture including in a solvent medium at least one silicone resin and at least one silane and/or at least one metal alkoxide, and c2) a condensation reaction to obtain the hybrid sol-gel composition;
d) applying on at least one of the faces (21, 22) of the support (2) at least one layer (31) of the sol-gel composition obtained in step b) to form a sol-gel coating (3) including at least one sol-gel layer in the form of a continuous film;
e) partially or continuously applying, by screen printing on said sol-gel coating, at least one layer (41, 42) of the hybrid sol-gel composition obtained in step c) to form a first screen-printed hybrid sol-gel layer; then
f) baking the whole at a temperature between 150°C and 350°C.

10. The method according to claim 9, wherein the silane and/or metal alkoxide are pre-hydrolyzed.

11. The method according to claim 9 or claim 10, wherein the solvent medium of said hybrid sol-gel composition includes at least one light organic solvent as a diluent, said light solvent being chosen from polar solvents having a boiling point less than or equal to 150°C, and at least one heavy organic solvent as a wetting agent, said heavy solvent being chosen from organic solvents having a molecular weight greater than or equal to 100 g.mol⁻¹ and a boiling point greater than or equal to 150°C.

12. The method according to any one of claims 9 to 11, further comprising, immediately after step c), a step of adding at least one pigment filler and/or at least one reinforcing filler to the hybrid sol-gel composition.
